Europäisches Patentamt

**European Patent Office**

**Office européen des brevets**

(19)

(11) Numéro de publication: **0 182 711**
**A1**

(12) **DEMANDE DE BREVET EUROPEEN**

(21) Numéro de dépôt: **85402206.8**

(22) Date de dépôt: **14.11.85**

(51) Int. Cl.⁴: **A 01 G 23/00,** A 01 F 29/10, B 02 C 23/02

(30) Priorité: **14.11.84 FR 8417378**

(43) Date de publication de la demande: **28.05.86** **Bulletin 86/22**

(84) Etats contractants désignés: **BE DE GB IT SE**

(71) Demandeur: **ASSOCIATION POUR LA RATIONALISATION ET LA MECANISATION DE L'EXPLOITATION FORESTIERE A.R.M.E.F., 164, Boulevard Haussmann, F-75008 Paris (FR)**

(72) Inventeur: **Fouchet, Claude Luc Achille, 14, rue de la Sirène, F-45200 Montargis (FR)**

(74) Mandataire: **Nony, Michel, Cabinet Nony 29, rue Cambacérès, F-75008 Paris (FR)**

(54) **Dispositif d'alimentation pour appareil à déchiqueter les végétaux.**

(57) L'invention est relative à un dispositif d'alimentation pour appareil à déchiqueter les végétaux.

Il comprend un chariot mobile (7) susceptible d'effectuer des mouvements de va-et-vient parallèlement à la direction d'alimentation, et deux plaques de pressage (10) montées sur ledit chariot pour se déplacer d'une position d'admission où elles sont écartées l'une de l'autre à une position d'alimentation où elles sont rapprochées.

EP 0 182 711 A1

0182711

- 1 -

Dispositif d'alimentation pour appareil à déchiqueter les végétaux.

La présente invention concerne un dispositif d'alimentation pour appareil à déchiqueter les végétaux.

On connaît actuellement des appareils destinés au déchiquetage d'arbres entiers qui sont introduits dans l'appareil le pied en premier. Ces appareils comportent un dispositif d'alimentation par rouleaux crantés assurant l'entraînement des troncs et leur passage à travers le tambour de coupe. Les cîmes et les branches sont alors entraînées simultanément au tronc, éventuellement en introduisant plusieurs arbres à la fois, afin que les rouleaux crantés soient toujours en contact avec un tronc.

En effet, ces dispositifs d'alimentation sont inefficaces lorsque les rouleaux crantés ne peuvent pas être pressés sur une surface suffisamment résistante.

En particulier, ces dispositifs ne peuvent fonctionner avec des branches ou des cîmes non liées à un tronc, qui ont tendance à foisonner, ou dans le cas d'arbres de petits diamètres que l'on rencontre dans l'exploitation du taillis.

Dans ce dernier cas, les rouleaux crantés, même pressés fortement, ne sont pas en contact avec une matière suffisamment homogène, et n'assurent plus l'entraînement de cette dernière. Les rouleaux patinent et l'appareil à déchiqueter n'est plus alimenté.

La présente invention vise à pallier ces· inconvénients en fournissant un dispositif d'alimentation pour appareil à déchiqueter pouvant notamment alimenter l'appareil à déchiqueter avec des végétaux foisonnant tels que des cîmes ou des branches d'arbre non liées à un tronc.

A cet effet, l'invention a pour objet un dispositif d'alimentation pour appareil à déchiqueter les végétaux, caractérisé par le fait qu'il comprend un chariot mobile susceptible d'effectuer des mouvements de va-et-vient parallèlement à la direction de l'alimentation, et deux plaques de pressage montées sur ledit chariot pour se déplacer d'une position d'admission où elles sont écartées l'une de l'autre, à une position d'alimentation où elles sont rapprochées.

L'admission des végétaux à déchiqueter se fait entre les plaques de pressage, alors que ces dernières sont en position écartée, et que le chariot est en position éloignée de l'orifice d'alimentation de l'appareil à déchiqueter.

Les végétaux sont alors compactés par le rapprochement des plaques de pressage, puis le chariot est avancé en direction de l'orifice d'alimentation de la déchiqueteuse où les végétaux sont entraînés après écartement des plaques de pressage.

Une alimentation convenable de l'appareil à déchiqueter sera obtenue même si le compactage est insuffisant, puisqu'une nouvelle masse de végétaux sera avancée lors du cycle suivant du dispositif d'alimentation.

Dans un mode de réalisation particulier de l'invention, lesdites plaques de pressage sont montées pivotantes sur ledit chariot, chacune autour d'un axe disposé à proximité de leur extrémité située du côté de l'orifice d'alimentation de l'appareil à déchiqueter.

Le dispositif selon l'invention se présente alors en position d'admission sous la forme d'un entonnoir dont le col serait tourné du côté de l'orifice d'alimentation de la déchiqueteuse, ce qui permet d'admettre dans le dispositif d'alimentation une masse de végétaux suffisante afin de la compacter et de l'amener à la déchiqueteuse.

Ces plaques de pressage peuvent en particulier être sensiblement verticales.

Dans un mode de réalisation particulier de l'invention, des plaques de guidage sont prévues à proximité de l'orifice d'alimentation de l'appareil à déchiqueter, lesdites plaques de guidage étant sensiblement parallèles aux plaques de serrage, lorsque ces dernières sont dans leur position d'alimentation.

Le rôle de ces plaques de guidage est d'une part, d'empêcher le relâchement et le foisonnement des végétaux compactés après l'écartement des plaques de pressage et, d'autre part, de guider ces végétaux compactés jusqu'à l'orifice d'alimentation de l'appareil à déchiqueter.

Afin de permettre une meilleure coopération des plaques de serrage et des plaques de guidage lors de la phase de translation du chariot de sa position éloignée de l'orifice d'alimentation à sa position rapprochée, ces plaques de serrage et de guidage peuvent posséder des découpes parallèles à la direction d'alimentation, disposées de manière à permettre un encastrement mutuel lors du déplacement du chariot en direction de l'orifice d'entrée dans l'appareil à déchiqueter.

On décrira maintenant à titre d'exemple non limitatif, un mode de réalisation particulier du dispositif d'alimentation selon l'invention en référence aux dessins schématiques annexés dans lesquels :

- La figure 1 est une vue de dessus du dispositif selon l'invention

- la figure 2 est une vue de côté selon la ligne II-II de la figure 1, et

- les figures 3a à 3d illustrent le fonctionnement de ce dispositif.

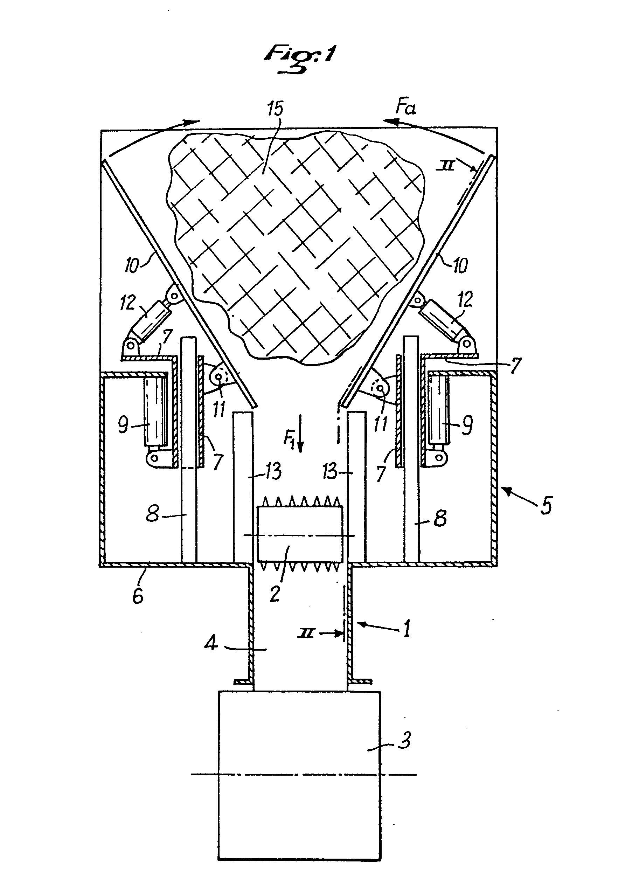

Le dispositif représenté à la figure 1 est destiné à l'alimentation d'une déchiqueteuse 1, formée de façon connue d'un rouleau d'alimentation à picots 2, et d'un tambour déchiqueteur 3 relié par un conduit d'alimentation 4.

Le dispositif d'alimentation proprement dit 5, est constitué d'un bâti 6, sur lequel un chariot 7 (ou deux chariots indépendants) est monté coulissant sur des guides 8 parallèles à la direction d'alimentation représentée par la flèche Fl. Des vérins 9 ont leur corps relié au bâti 6 et leur tige reliée au chariot 7 pour assurer la translation de ce chariot dans la direction de la flèche Fl et dans la direction inverse.

Des plaques de serrage verticales 10 sont montées sur le chariot 7, pivotantes autour d'axes verticaux 11.

Ces axes sont situés par rapport aux plaques 10 du côté de la déchiqueteuse 1 de sorte que lorsque les plaques sont dans leur position écartée représentée à la figure 1, elles forment un couloir en forme d'entonnoir dont le col est dirigé vers la déchiqueteuse.

Le pivotement des plaques autour des axes 11, est assuré au moyen de vérins 12, dont les corps sont montés sur le chariot 7 et les tiges sont reliées aux plaques 10.

Des plaques de guidage verticales 13, sont montées solidaires du bâti 6, de part et d'autre du rouleau d'alimentation 2 parallèlement à la direction de la flèche Fl.

Les plaques de serrage 10 et les plaques de guidage 13 comportent des découpes horizontales 14a et 14b, décalées verticalement afin de permettre leur encastrement mutuel lors du déplacement relatif des plaques 10 et des plaques 13.

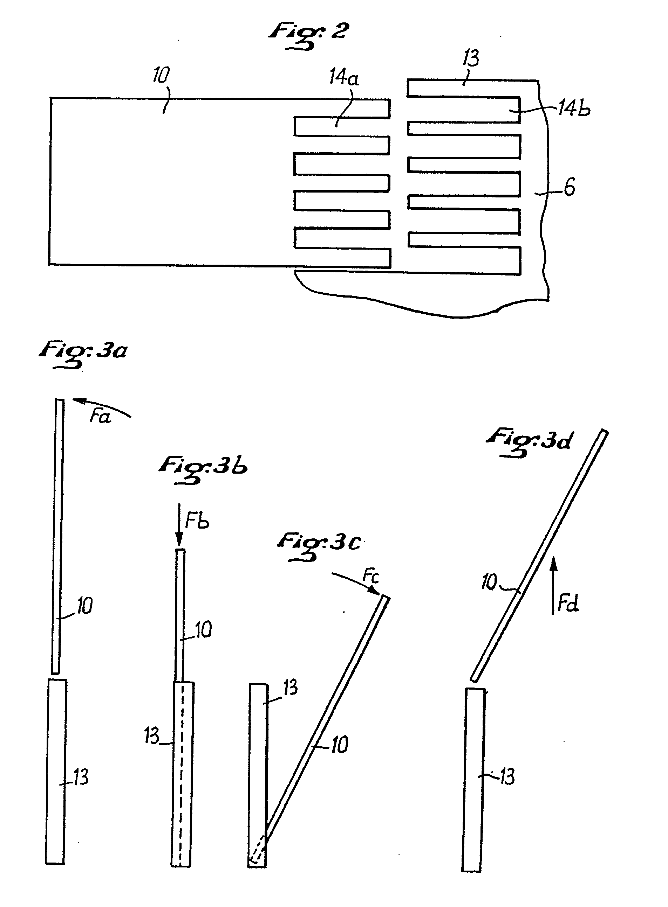

On décrira maintenant le fonctionnement du dispositif des figures 1 et 2 en référence aux figures 3a à 3d qui représentent dans leurs diverses positions les plaques 10 et 13 illustrées à la partie droite de la figure 1.

Le chariot 7 est tout d'abord éloigné à l'aide des vérins 9 de l'orifice d'alimentation de la déchiqueteuse 1 et les plaques 10 sont écartées au moyen des vérins 12.

Dans cette position, représentée à la figure 1, une masse 15 de végétaux foisonnants est placée sur le châssis du dispositif d'alimentation entre les plaques 10. Celles-ci sont alors rapprochées dans la direction de la flèche Fa sous l'action des vérins 12 afin de compacter les végétaux 15. Le dispositif se trouve alors dans la position représentée à la figure 3a.

Le chariot 7 est alors rapproché à l'aide des vérins 9 de l'orifice de la déchiqueteuse 1 suivant la direction de la flèche Fb de la figure 3b.

Dans ce mouvement, les découpes 14a des plaques de serrage 10 et les découpes 14b des plaques de guidage 13 s'encastrent les unes dans les autres.

Les plaques 10 sont alors de nouveau écartées dans la direction de la flèche Fc de la figure 3c, les végétaux étant maintenus compactés par les plaques de guidage 13.

Enfin, le chariot 7 est de nouveau éloigné de la déchiqueteuse 1 dans la direction de la flèche Fd de la figure 3d, le dispositif se retrouvant alors à la fin de cette phase dans sa position initiale.

Dès la phase d'approche du chariot 7 de la déchiqueteuse 1, les végétaux commencent à être entraînés par le rouleau d'alimentation 2, vers le tambour de déchiquetage 3. Si toutefois le compactage de ces végétaux était insuffisant, les végétaux arrivant lors du cycle suivant de fonctionnement du dispositif d'alimentation pousseraient, dans la direction de la flèche Fl, les végétaux déjà amassés entre les plaques de guidage 13.

Diverses variantes et modifications peuvent bien entendues être apportées à la description ci-dessus sans sortir pour autant du cadre ni de l'esprit de l'invention.

REVENDICATIONS

1 - Dispositif d'alimentation pour appareil à déchiqueter les végétaux, caractérisé par le fait qu'il comprend un chariot mobile (7) susceptible d'effectuer des mouvements de va-et-vient parallèlement à la direction d'alimentation, et deux plaques de pressage (10) montées sur ledit chariot pour se déplacer d'une position d'admission où elles sont écartées l'une de l'autre à une position d'alimentation où elles sont rapprochées.

2 - Dispositif selon la revendication 1, caractérisé par le fait que lesdites plaques de pressage sont montées pivotantes sur ledit chariot, chacune autour d'un axe (11) disposé à proximité de leur extrémité située du côté de l'orifice d'alimentation de l'appareil à déchiqueter.

3 - Dispositif selon l'une quelconque des revendications 1 et 2, caractérisé par le fait que lesdites plaques de pressage sont sensiblement verticales.

4 - Dispositif selon l'une quelconque des revendications 1 à 3, caractérisé par le fait que des plaques de guidage (13) sont prévues à proximité de l'orifice d'alimentation de l'appareil à déchiqueter, lesdites plaques de guidage étant sensiblement parallèles aux plaques de serrage lorsque ces dernières sont dans leur position d'alimentation.

5 - Dispositif selon la revendication 4, caractérisé par le fait que les plaques de serrage et les plaques de guidage possèdent des découpes (14a, 14b) parallèles à la direction d'alimentation, disposées de manière à permettre un encastrement mutuel lors du déplacement du chariot en direction de l'orifice d'entrée dans l'appareil à déchiqueter.

*Fig:1*

2/2

**Fig. 2**

**Fig. 3a**

**Fig. 3b**

**Fig. 3c**

**Fig. 3d**

Office européen
des brevets

**RAPPORT DE RECHERCHE EUROPEENNE**

0182711
Numero de la demande

EP  85 40 2206

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 4) |
|---|---|---|---|
| Y | FR-A- 474 340 (REINEMANN) <br> * Revendication 1; figure 1; page 1, ligne 49 - page 2, ligne 10 * | 1,2 | A 01 G 23/00 <br> A 01 F 29/10 <br> B 02 C 23/02 |
| | --- | | |
| Y | DE-A-3 241 490 (MEYER) <br> * Revendications 1,2,6,8; figure 2; page 10, ligne 20 - page 11, ligne 21; page 13, lignes 5-16 * | ·1,2 | |
| A | | 3-5 | |
| | --- | | |
| A | DE-C- 483 309 (BOSLE) <br> * Page 1, lignes 12-32; revendication 1; figures 1-5 * | 1-3 | |
| | --- | | |
| A | FR-A-2 512 636 (BARONI) <br> * Revendications 1,2; figure 2 * | 1-3 | DOMAINES TECHNIQUES RECHERCHES (Int. Cl.4) |
| | --- | | |
| A | FR-A-2 524 257 (BIOMASA) | | A 01 G <br> A 01 F <br> A 01 D <br> B 02 C |
| | ----- | | |

Le présent rapport de recherche a été établi pour toutes les revendications

| Lieu de la recherche <br> LA HAYE | Date d'achèvement de la recherche <br> 03-02-1986 | Examinateur <br> MEINDERS H. |
|---|---|---|